# EUROPEAN PATENT SPECIFICATION

(11) **EP 4 014 921 B1**
(45) Date of publication and mention of the grant of the patent: **07.02.2024**
(21) Application number: 21214784.7
(22) Date of filing: 15.12.2021
(51) Int. Cl.: A61C 5/64, A61C 5/66, A61C 5/68

(54) **DENTAL CAPSULE**
DENTALKAPSEL
CAPSULE DENTAIRE

(30) Priority: 17.12.2020 AU 2020904712; 18.10.2021 AU 2021254523
(43) Date of publication of application: 22.06.2022
(73) Proprietor: SDI Limited, Bayswater, VIC 3153 (AU)
(72) Inventor: CHEETHAM, Joshua James, Windsor, 3181 (AU)
(74) Representative: Bianchetti & Minoja with Trevisan & Cuonzo IPS SRL

(56) References cited:
- US-A- 3 762 540
- US-A1- 2011 027 751
- US-A1- 2018 021 111

## Description

### FIELD OF THE INVENTION

The present invention relates to a dental capsule for mixing and dispensing dental materials.

### BACKGROUND

In dentistry it is a common need to use compounds for procedures such as polishing, medicinal treatment, repairs and modifications. Dental compounds are often a mixture of components that form a paste and harden.

Known delivery mechanisms for this paste include mixing the components of a single liquid and a single powder and applying the paste via a swab or syringe. This process can be time-consuming and awkward, especially if the mixture is quick to set. Furthermore, capsules that contain only one liquid and one powder have very limited chemistries. For example initiators for the liquid need to be contained in the powder which may not be practical. Further more if two different initiators are needed for a liquid, these may not be able to be stored together in the powder component. US2018021111 discloses a container for mixing and dispensing of material having a liquid receptacle and a plunger. The plunger has a forwardly projecting sharp protrusion. Upon the plunger being depressed the sharp protrusion pierces a front portion of the liquid receptacle and the liquid in the receptacle is pushed hydraulically through the front portion into the main chamber where it mixes with the material in the main chamber to form a mixture.

The present invention attempts to overcome at least in part the aforementioned disadvantages of previous mixture delivery means.

### SUMMARY OF THE INVENTION

In accordance with one aspect of the present invention there is provided a dental capsule for mixing and dispensing dental materials comprised of at least three components, the capsule comprising:
a plunger;
a first open-ended liquid receptacle adapted to receive the plunger;
a second open-ended liquid receptacle adapted to receive the first liquid receptacle;
wherein the plunger has a forwardly projecting protrusion adapted to sequentially pierce a weakened portion of the first liquid receptacle and a weakened portion of the second liquid receptacle; and
a main body with a proximal end, a distal end, a chamber open at the proximal end and an aperture in the distal end;
wherein the chamber is adapted to receive the second liquid receptacle; and
wherein the dental capsule is adapted to mix various components of the dental materials and form a dental paste for dispensing.

In a preferred embodiment, a first liquid is housed within the first liquid receptacle, a second liquid is housed within the second liquid receptacle, and a powder is housed within the chamber.

In a preferred embodiment, the first liquid receptacle incorporates a centrally weakened portion.

In a preferred embodiment, the second liquid receptacle incorporates a centrally weakened portion.

In a preferred embodiment, the plunger is in engagement with the first liquid receptacle such that upon the plunger being depressed liquid in the first receptacle is pushed into the second liquid receptacle.

In a preferred embodiment, further depression of the plunger causes liquid in the second liquid receptacle to be pushed into the chamber of the body so as to contact material in the main chamber, wherein after mixing a front portion of the second liquid receptacle is broken away by depression of the plunger so as to push resultant mixture through the aperture.

In a preferred embodiment, the dental capsule further comprises internal features that provide tactile feedback to an operator as to how far the plunger has been depressed, or how far the first liquid receptacle or second liquid receptacle have moved.

In a preferred embodiment, the dental capsule, or a portion thereof, is made from a transparent material allowing for an operator to view the mixing of liquids and/or powder, and/or how far the plunger has been depressed.

In a preferred embodiment, the dental capsule further comprises a nozzle connected to the aperture at the distal end of the main body.

In a preferred embodiment, the dental capsule further comprises, a frangible membrane covering the aperture at the distal end of the main body. More preferably, the frangible membrane which when broken provides access for an applicator device, such as a brush or swab, after mixing has been undertaken.

In an alternative embodiment, the first liquid receptacle and second liquid receptacle are arranged to simultaneously release multiple components into the chamber.

In a preferred embodiment, the chamber incorporates vent means for allowing entrapped air to escape from the dental paste during extrusion.

In a preferred embodiment, the central weakened portion of the first liquid receptacle and/or second liquid receptacle has a thickness of less than 0.05 mm, and preferably less than 0.03mm.

In a preferred embodiment, the central weakened portion of the first liquid receptacle and/or second liquid receptacle is formed of a unitary sheet of material that is integral to the first liquid receptacle or second liquid receptacle respectively. The first liquid receptacle and/or second liquid receptacle may be moulded.

In a preferred embodiment, the frangible membrane has a thickness of less than 0.02 mm.

In a preferred embodiment, the frangible membrane is formed of a unitary sheet of material.

### BRIEF DESCRIPTION OF DRAWINGS

The present invention will now be described, by way of example, with reference to the accompanying drawings, in which:
Figure 1 is a disassembled cross-sectional view of a dental capsule in accordance to an embodiment of the present invention.
Figure 2 is a cross-sectional view of the embodiment of the dental capsule depicted in Figure 1 in a first stage of use.
Figure 3 is a cross-sectional view of the embodiment of the dental capsule depicted in Figure 1 in a second stage of use.
Figure 4 is a cross-sectional view of the embodiment of the dental capsule depicted in Figure 1 in a third stage of use.
Figure 5 is a cross-sectional view of the embodiment of the dental capsule depicted in Figure 1 in a fourth stage of use.
Figure 6 is a cross-sectional view of the embodiment of the dental capsule depicted in Figure 1 in a fifth stage of use.
Figure 7 is a cross-sectional view of the embodiment of the dental capsule depicted in Figure 1 in a sixth stage of use.
Figure 8 is a disassembled cross-sectional view of a dental capsule in accordance to an alternative embodiment of the present invention.
Figure 9 is a cross-sectional view of the embodiment of the dental capsule depicted in Figure 8 in a first stage of use.
Figure 10 is a cross-sectional view of the embodiment of the dental capsule depicted in Figure 8 in a second stage of use.
Figure 11 is a cross-sectional view of the embodiment of the dental capsule depicted in Figure 8 in a third stage of use.
Figure 12 is a cross-sectional view of the embodiment of the dental capsule depicted in Figure 8 in a fourth stage of use.
Figure 13 is a cross-sectional view of the embodiment of the dental capsule depicted in Figure 8 in a fifth stage of use.
Figure 14 is a cross-sectional view of the embodiment of the dental capsule depicted in Figure 8 in a sixth stage of use.

### DESCRIPTION OF PREFERRED EMBODIMENTS

The present invention provides a dental capsule for mixing and dispensing dental materials comprised of at least three components, the capsule comprising:
a plunger;
a first open-ended liquid receptacle adapted to receive the plunger;
a second open-ended liquid receptacle adapted to receive the first liquid receptacle; and
a main body with a proximal end, a distal end, a chamber open at the proximal end and an aperture in the distal end;
wherein the chamber is adapted to receive the second liquid receptacle; and
wherein the dental capsule is adapted to mix various components of the dental materials and form a dental paste for dispensing.

Previous methods for applying dental compounds that have three components include separate mixing stages/tools and application tools. The principle advantage of this embodiment is that, unlike the previous methods of mixing and dispensing dental compounds that have three components, the present embodiment is capable of performing the necessary tasks for both mixing and dispensing a dental paste in a single tool.

In particular, the present embodiment is directed toward a dental capsule for mixing and dispensing a dental paste comprised of two liquid components and one powder component.

The dental container may be arranged such that, the first liquid is housed within the first liquid receptacle, the second liquid is housed within the second liquid receptacle, and the powder is housed within the chamber.

The first liquid receptacle may incorporate a centrally weakened portion.

The second liquid receptacle may incorporate a centrally weakened portion.

The plunger has a sharp forwardly projecting protrusion adapted to break the centrally weakened portion of the first liquid receptacle and/or the centrally weakened portion of the second liquid receptacle. The forwardly projecting protrusion achieves breakage through piercing.

The plunger may be in engagement with the first liquid receptacle such that upon the plunger being depressed liquid in the first receptacle is pushed into the second liquid receptacle.

After mixing in a mixing machine, the dental capsule may be arranged such that, further depression of the plunger liquid in the second liquid receptacle is pushed into the chamber of the body so as to contact material in the main chamber, wherein a front portion of the second liquid receptacle is broken away by depression of the plunger so as to reduce resistance to dispensation.

The dental capsule may further comprise internal features that provide tactical feedback to an operator as to how far how far the plunger has been depressed, or how far the first liquid receptacle or second liquid receptacle have moved. This feature is especially useful when determining stages of activation when there are separate time requirements for mixing various components. For example, it may be desirable to retain the plunger in positon so as to not break the weakened portion of the second liquid receptacle so that the first liquid and second liquid have time to fully mix and react before encountering the powder.

The dental capsule, or a portion thereof may be made from a transparent material allowing for an operator to view the mixing of liquids and/or powder, and/or how far the plunger has been depressed.

The dental capsule may further comprise a nozzle connected to the aperture at the distal end of the main body.

The dental capsule may further comprise, a frangible membrane covering the aperture at the distal end of the main body. More preferably, the frangible membrane which when broken provides access for an applicator device, such as a brush or swab, after mixing has been undertaken.

In an alternative embodiment the first liquid receptacle and second liquid receptacle may be arranged to simultaneously release multiple components into the chamber. In this embodiment the first liquid container may not be arranged to release a component into the second liquid receptacle. This will be suitable for specific dental materials that require specific mixing. For example, in one alternative embodiment a dental capsule may comprise a plunger; a first open-ended liquid receptacle adapted to receive the plunger; a second open-ended liquid receptacle adapted to receive the plunger; and a main body with a proximal end, a distal end, a chamber open at the proximal end and an aperture in the distal end; wherein the chamber is adapted to receive the first liquid receptacle and the second liquid receptacle; and wherein the dental capsule is adapted to mix various components of the dental materials and form a dental paste for dispensing.

The chamber may incorporate vent means for allowing entrapped air to escape from the dental paste.

The central weakened portion of the first liquid receptacle and/or second liquid receptacle may have a thickness of less than 0.05 mm, preferably less than 0.03mm.

The central weakened portion of the first liquid receptacle and/or second liquid receptacle may be formed of a unitary sheet of material that is integrally connected to the first liquid receptacle or second liquid receptacle respectively. The first liquid receptacle and/or second liquid receptacle may be moulded.

The frangible membrane may have a thickness of less than 0.02 mm.

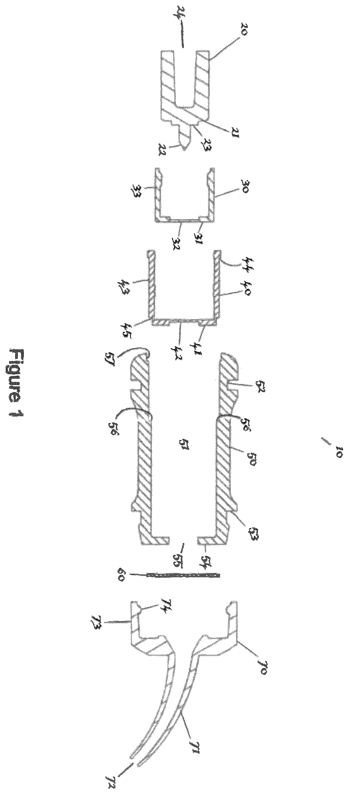

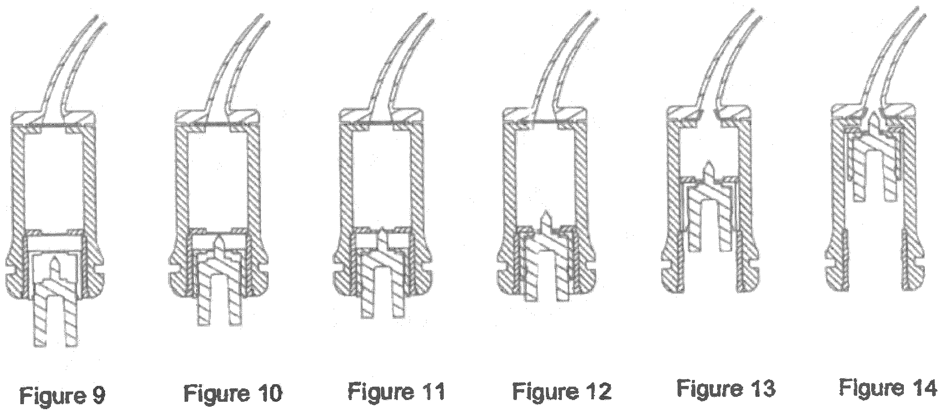

Referring to FIGS. 1 to 14 of the accompanying drawings there is shown a dental capsule that is particularly envisaged to be used for use in dispensing of dental materials, or a composition formed therefrom.

The dental capsule may be manipulated via hand with the use of an applicator tool.

Referring to FIGS. 1 to 7 there is shown an embodiment of the present invention.

In FIG. 1, of the accompanying drawings there is shown a dental capsule 10 in its unassembled form and its individual components in cross section. The dental capsule 10 when assembled comprises a plunger 20, a first open-ended liquid receptacle 30, a second open-ended liquid receptacle 40, a main body 50, a seal 60, and a discharge cap 70.

The first open-ended liquid receptacle 30 is arranged to contain a liquid. The receptacle 30 is sealed by the plunger 20 such as by seal means located on an internal surface of the first open-ended liquid receptacle 30.

The plunger 20 is initially located in an open end of the receptacle 30 and has a front face 21. Further, the front face 21 of the plunger 20 has extending therefrom a sharp forwardly projecting protrusion 22. The sharp forwardly projecting protrusion 22 is adapted to pierce a centrally weakened portion 32 of the first open-ended liquid receptacle 30 and a centrally weakened portion 42 of the first open-ended liquid receptacle 40.

The plunger 20 has a raised front portion 23 projecting from the front face 21. The raised front portion 23 is smaller in size that the weakened portion 32 of the first open-ended liquid receptacle 30, such that when the front face 21 forms close abutting contact with internal side of the front portion 31 the raised front portion 23 pushes through the pierced weakened portion 32. This ensures that a substantial quantity of the first fluid is forced into the second open-ended liquid receptacle 40.

The plunger 20 is adapted to receive an applicator tool (not shown). The applicator tool may hold the dental capsule 10 and may assist the depression of the plunger 20 into the capsule. Alternatively, the plunger 20 may be depressed manually.

The first open-ended liquid receptacle 30 is arranged to contain a first liquid. The receptacle 30 is sealed by the plunger 20 such as by seal means located on an external surface of the plunger 20.

The first open-ended liquid receptacle 30 has a side wall 33 and a front portion 31 with a central weakened portion 32. The central weakened portion 32 is substantially thinner than the remainder of the front portion 31 of the first open-ended liquid receptacle 30.

The second open-ended liquid receptacle 40 is arranged to contain a second liquid. The receptacle 40 is sealed by the receptacle 30 such as by seal means located on an internal surface of the second open-ended liquid receptacle 40.

The second open-ended liquid receptacle 40 has a side wall 43 and a front portion 41 with a central weakened portion 42. The central weakened portion 42 is substantially thinner than the remainder of the front portion 41 of the second open-ended liquid receptacle 40.

The second open-ended liquid receptacle 40 has rear shoulder 44 formed around the perimeter. The walls of the chamber 51 have a stepped portion 57 adapted to receive the rear shoulder 44.

The second open-ended liquid receptacle 40 has a front shoulder 45 formed as part of the side wall 43 around the perimeter of the front portion 41. The walls of the chamber 51 have a stepped portion 56 adapted to receive the front shoulder 45.

The front portion 41 and the sidewall 43 are connected by frangible material. When a force is applied to the internal side of the front portion 41 and is counteracted by a force against the front shoulder 45 in the opposite direction the connection between front portion 41 and the sidewall 43 breaks.

The main body 50 contains a chamber 51 which is arranged to house an amount of powder. The main body has a proximal end 58 and a distal end 54. The chamber 51 is sealed on the proximal end 58 end by the second open-ended liquid receptacle 40 such as by seal means located on an external surface of the second open-ended liquid receptacle 40.

The main body 50 incorporates an aperture 55 in the distal end 54 that allows for fluid communication through the distal end 54.

The chamber 51 of the main body 50 is sealed at the distal end 54 by a frangible membrane 60 which is connected to the body 50 by any convenient means, such as an adhesive. The distal end 54 of the main body 50 is opposed to a proximal end 54 a thereof. The main body 50 has attached thereto a discharge cap 70.

The main body 50 has an outwardly facing circumferential groove 52 adapted to be held in use by an applicator tool (not shown).

The main body 50 has an outwardly facing circumferential groove 53.

The seal 60 is a frangible membrane which retains the powder inside the chamber 51, but will break when subjected to sufficient force or pressure.

The discharge cap 70 has a nozzle 71 for dispensing material. The nozzle 71 is shown as a curved discharge nozzle however other versions such as straight, angled or luer lock type (for attaching a needle hub) are also envisioned in this invention.

The discharge cap 70 has a perimeter wall 74 adapted to go over the distal end of the main body 50.

The perimeter wall 73 has an inwardly facing circumferential ridge 74. The outwardly facing circumferential groove 53 is adapted to receive the inwardly facing circumferential ridge 74. The arrangement depicted ensures that the discharge cap 70 remains on the distal end of the main body 50 if the discharge cap 70 is made from a material with properties which allow for elastic deformation whilst retaining some rigidity.

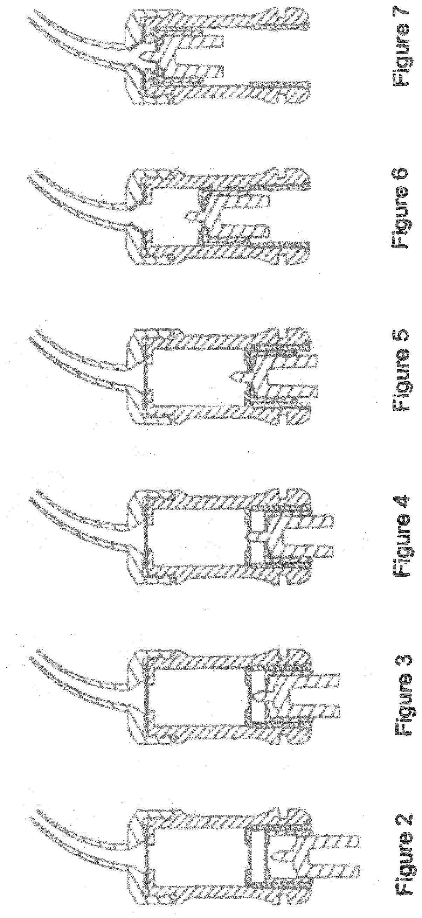

Referring to FIGS. 2 to 7 there is shown the dental capsule 10 in six distinct stages of activation which describe the use of the dental capsule 10.

Stage 1 (as shown in Figure 2): An assembled dental capsule 10, wherein:
the second open-ended liquid receptacle 40 is inserted into the chamber 51 of the main body 50;
the first open-ended liquid receptacle 30 is inserted into the open end of the second open-ended liquid receptacle 40;
the plunger 20 is inserted into the open end of the first open-ended liquid receptacle 30;
the discharge cap 70 is installed on the opposite end of the main body 50 to the end where the plunger 20 is installed; and
the seal 60 is disposed in between the discharge cap 70 and the main body 50.

A first liquid is contained within an enclosure formed by the first open-ended liquid receptacle 30 and the plunger 20.

A second liquid is contained within an enclosure the second open-ended liquid receptacle 40 and the first open-ended liquid receptacle 30.

A powder is contained within an enclosure formed by the chamber 51 and the second open-ended liquid receptacle 40.

Stage 2 (as shown in Figure 3): The plunger 20 has been depressed so that the forwardly projecting protrusion 22 pierces the central weakened portion 32 of the first open-ended liquid receptacle 30, and the front face 21 of the plunger 20 applies pressure to the first liquid contained in the first open-ended liquid receptacle 30. The first liquid is displaced hydraulically forced through the penetration of the weakened portion 32 and mixes with the second liquid in the second open-ended liquid receptacle 40.

Stage 3 (as shown in Figure 4): The plunger 20 has been depressed further such that the forwardly projecting protrusion 22 partially pierces the central weakened portion 42 of the second open-ended liquid receptacle 40, and the front face 21 of the plunger 20 has formed close abutting contact with the internal side of the front portion 31. The substantial quantity of the first fluid is now contained with and mixes with the second fluid within the second open-ended liquid receptacle 40.

Stage 4 (as shown in Figure 5): The plunger 20 has been depressed further such that the forwardly projecting protrusion 22 has fully pierced the central weakened portion 42 of the second open-ended liquid receptacle 40, and the front portion 31 has formed close abutting contact with the internal side of the front portion 41. The force supplied by the depressed plunger 20 applies pressure to the mixture of the first and second liquid. The pressurised mixture is displaced hydraulically through the penetration of the weakened portion 42. The substantial quantity of the mixture of the first fluid and the second fluid is now contained with and admixes with the powder within chamber 51 forming a paste. The dental capsule 10 may then be placed into a known vibrating mixing device to hasten the mixing process.

Stage 5 (as shown in Figure 6): The plunger 20 has been depressed further such that the front portion 41 has broken off from the sidewall 43. The front portion 41 is a disc shape and fits the interior of the chamber 51 acting as a seal and prevents paste from travelling rearwardly. The force supplied by the depressed plunger 20 applies pressure to the mixture of the first liquid, the second liquid and the powder. The seal 60 has ruptured due to the pressure, thus allowing fluid communication between the main chamber 51 and the nozzle discharge cap 70, and allowing for the paste within the chamber 51 to be pushed through the nozzle 71 and out of the discharge orifice 72 to a desired location.

Stage 6 (as shown in Figure 7): The dental capsule 10 is fully activated and a substantial quantity of the paste has been dispensed. The plunger 20 has been depressed further such that the front portion 41 has formed close abutting contact with the internal side of the distal end 54 of the main body 50.

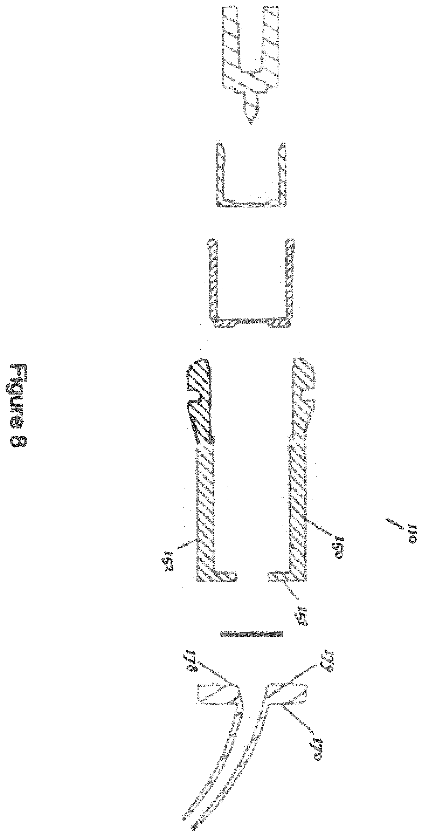

Referring to FIGS. 8 to 14 there is shown an alternative embodiment of the present invention which describe the use of the dental capsule 110.

The key difference between the first and second embodiment is the means in which the discharge cap engages with the main body.

In the alternative embodiment the main body 150 does not possess an equivalent feature of the outwardly facing circumferential groove 53. Nor does the discharge cap 170 possess the equivalent features of the perimeter wall 73 or the inwardly facing circumferential ridge 74.

In the alternative embodiment the main body 150 presents a substantially smooth front surface 151 and side surface 152.

The discharge cap 170 presents a flat face 178 adapted to correspond to the front surface 151 of the main body 150.

The discharge cap 170 further features spikes 179 adapted to engage by welding with the front surface 151 and retain the discharge cap 170 on the main body 150.

In use, the alternative embodiment performs the functions of containing fluids and powder, mixing said components and dispensing the resultant mixture substantially the same as the previous embodiment.

The container of the present invention is particularly envisaged for use in mixing of dental materials but it is to be understood that it is of general applicability.

Modifications and variations as would be apparent to a skilled addressee are deemed to be within the scope of the present invention. It is known that dental compounds can be produced through a variety of combinations of liquids and powders. It is understood that specific reference in this specification to liquids or powders can easily be modified to suit the mixing and dispensing of an alternate component (i.e. a dental compound formed from one liquid component and two powder components).

## Claims

1. A dental capsule for mixing and dispensing dental materials comprised of at least three components, the capsule comprising:
a plunger (20); a first open-ended liquid receptacle (30) adapted to receive the plunger (20);
a second open-ended liquid receptacle (40) adapted to receive the first liquid receptacle (30);
wherein the plunger (20) has a forwardly projecting protrusion (22) adapted to sequentially pierce a weakened portion of the first liquid receptacle (30) and a weakened portion of the second liquid receptacle (40); and
a main body (50) with a proximal end (58), a distal end (54), a chamber (51) open at the proximal end and an aperture (55) in the distal end;
wherein the chamber (51) is adapted to receive the second liquid receptacle (40); and
wherein the dental capsule (10) is adapted to mix various components of the dental materials and form a dental paste for dispensing.

2. A dental capsule of claim 1 wherein, a first liquid is housed within the first liquid receptacle, a second liquid is housed within the second liquid receptacle, and a powder is housed within the chamber.

3. A dental capsule of claims 1 or 2 wherein, the first liquid receptacle incorporates a centrally weakened portion.

4. A dental capsule of any of the preceding claims wherein, the second liquid receptacle incorporates a centrally weakened portion.

5. A dental capsule of any of the preceding claims wherein, the plunger is in engagement with the first liquid receptacle such that upon the plunger being depressed liquid in the first receptacle is pushed into the second liquid receptacle.

6. A dental capsule of any of the preceding claims wherein, further depression of the plunger causes liquid in the second liquid receptacle to be pushed into the chamber of the body so as to contact material in the chamber, wherein after mixing a front portion of the second liquid receptacle is broken away by depression of the plunger so as to push resultant mixture through the aperture.

7. A dental capsule of any of the preceding claims wherein, the dental capsule further comprises internal features that provide tactile feedback to an operator as to how far the plunger has been depressed, or how far the first liquid receptacle or second liquid receptacle have moved.

8. A dental capsule of any of the preceding claims wherein, the dental capsule, or a portion thereof, is made from a transparent material allowing for an operator to view the mixing of liquids and/or powder, and/or how far the plunger has been depressed.

9. A dental capsule of any of the preceding claims wherein, the dental capsule further comprises a nozzle connected to the aperture at the distal end of the main body.

10. A dental capsule of any of the preceding claims wherein, the dental capsule further comprises, a frangible membrane covering the aperture at the distal end of the main body.

11. A dental capsule of claim 10 wherein, the frangible membrane which when broken provides access for an applicator device, such as a brush or swab, after mixing has been undertaken.

12. A dental capsule of any of claims 1 to 4 wherein, the first liquid receptacle and second liquid receptacle are arranged to simultaneously release multiple components into the chamber.

13. A dental capsule of any of the preceding claims wherein, the chamber incorporates vent means for allowing entrapped air to escape from the dental paste during extrusion.

14. A dental capsule of claims 4 to 13 wherein, the central weakened portion of the first liquid receptacle and/or the second liquid receptacle has a thickness of less than 0.05 mm.

15. A dental capsule of claims 4 to 14 wherein, the central weakened portion of the first liquid receptacle and/or the second liquid receptacle has a thickness of less than 0.03mm.

16. A dental capsule of claims 4 to 15 wherein, the central weakened portion of the first liquid receptacle and/or the second liquid receptacle is formed of a unitary sheet of material that is integral to the first liquid receptacle or second liquid receptacle respectively.

17. A dental capsule of claims 11 to 16 wherein, the frangible membrane has a thickness of less than 0.02 mm.

18. A dental capsule of claims 11 to 17 wherein, the frangible membrane is formed of a unitary sheet of material.

## Patentansprüche

1. Dentalkapsel zum Mischen und Ausgeben von Dentalmaterialien, die aus mindestens drei Komponenten zusammengesetzt sind, wobei die Kapsel umfasst:
einen Kolben (20);
einen ersten offenendigen Flüssigkeitsbehälter (30), der ausgestaltet ist, um den Kolben (20) aufzunehmen;
einen zweiten offenendigen Flüssigkeitsbehälter (40), der ausgestaltet ist, um den ersten Flüssigkeitsbehälter (30) aufzunehmen;
wobei der Kolben (20) einen nach vorne vorstehenden Vorsprung (22) aufweist, der ausgestaltet ist, um nacheinander einen geschwächten Abschnitt des ersten Flüssigkeitsbehälters (30) und einen geschwächten Abschnitt des zweiten Flüssigkeitsbehälters (40) zu durchstechen; und
einen Hauptkörper (50) mit einem proximalen Ende (58), einem distalen Ende (54), einer Kammer (51), die an dem proximalen Ende offen ist, und einer Öffnung (55) in dem distalen Ende;
wobei die Kammer (51) ausgestaltet ist, um den zweiten Flüssigkeitsbehälter (40) aufzunehmen; und
wobei die Dentalkapsel (10) ausgestaltet ist, um verschiedene Komponenten der Dentalmaterialien zu mischen und eine Dentalpaste zum Ausgeben zu bilden.

2. Dentalkapsel nach Anspruch 1, wobei eine erste Flüssigkeit in dem ersten Flüssigkeitsbehälter untergebracht ist, eine zweite Flüssigkeit in dem zweiten Flüssigkeitsbehälter untergebracht ist und ein Pulver in der Kammer untergebracht ist.

3. Dentalkapsel nach Anspruch 1 oder 2, wobei der erste Flüssigkeitsbehälter einen zentral geschwächten Abschnitt enthält.

4. Dentalkapsel nach einem der vorhergehenden Ansprüche, wobei der zweite Flüssigkeitsbehälter einen zentral geschwächten Abschnitt enthält.

5. Dentalkapsel nach einem der vorhergehenden Ansprüche, wobei der Kolben mit dem ersten Flüssigkeitsbehälter in Eingriff steht, so dass, wenn der Kolben niedergedrückt wird, Flüssigkeit in dem ersten Behälter in den zweiten Flüssigkeitsbehälter gedrückt wird.

6. Dentalkapsel nach einem der vorhergehenden Ansprüche, wobei ein weiteres Niederdrücken des Kolbens bewirkt, dass Flüssigkeit in dem zweiten Flüssigkeitsbehälter in die Kammer des Körpers gedrückt wird, um mit dem Material in der Kammer in Kontakt zu kommen, wobei nach einem Mischen ein vorderer Abschnitt des zweiten Flüssigkeitsbehälters durch Niederdrücken des Kolbens weggebrochen wird, um die resultierende Mischung durch die Öffnung zu drücken.

7. Dentalkapsel nach einem der vorhergehenden Ansprüche, wobei die Dentalkapsel ferner innere Merkmale umfasst, die einer Bedienperson eine taktile Rückmeldung darüber bereitstellen, wie weit der Kolben niedergedrückt wurde oder wie weit sich der erste Flüssigkeitsbehälter oder der zweite Flüssigkeitsbehälter bewegt haben.

8. Dentalkapsel nach einem der vorhergehenden Ansprüche, wobei die Dentalkapsel oder ein Abschnitt davon aus einem transparenten Material gefertigt ist, das einer Bedienperson ermöglicht, das Mischen von Flüssigkeiten und/oder Pulver und/oder wie weit der Kolben heruntergedrückt wurde, zu sehen.

9. Dentalkapsel nach einem der vorhergehenden Ansprüche, wobei die Dentalkapsel ferner eine Düse umfasst, die mit der Öffnung an dem distalen Ende des Hauptkörpers verbunden ist.

10. Dentalkapsel nach einem der vorangehenden Ansprüche, wobei die Dentalkapsel ferner eine zerbrechliche Membran umfasst, die die Öffnung an dem distalen Ende des Hauptkörpers abdeckt.

11. Dentalkapsel nach Anspruch 10, wobei die zerbrechliche Membran, wenn sie zerbrochen ist, einen Zugang für eine Applikatorvorrichtung, wie z. B. eine Bürste oder einen Tupfer, ermöglicht, nachdem ein Mischen unternommen wurde.

12. Dentalkapsel nach einem der Ansprüche 1 bis 4, wobei der erste Flüssigkeitsbehälter und der zweite Flüssigkeitsbehälter ausgestaltet sind, um gleichzeitig mehrere Komponenten in die Kammer abzugeben.

13. Dentalkapsel nach einem der vorhergehenden Ansprüche, wobei die Kammer Belüftungsmittel enthält, um eingeschlossener Luft zu ermöglichen, während einer Extrusion aus der Dentalpaste zu entweichen.

14. Dentalkapsel nach einem der Ansprüche 4 bis 13, wobei der zentrale geschwächte Abschnitt des ersten Flüssigkeitsbehälters und/oder des zweiten Flüssigkeitsbehälters eine Dicke von weniger als 0,05 mm aufweist.

15. Dentalkapsel nach einem der Ansprüche 4 bis 14, wobei der zentrale geschwächte Abschnitt des ersten Flüssigkeitsbehälters und/oder des zweiten Flüssigkeitsbehälters eine Dicke von weniger als 0,03 mm aufweist.

16. Dentalkapsel nach einem der Ansprüche 4 bis 15, wobei der zentrale geschwächte Abschnitt des ersten Flüssigkeitsbehälters und/oder des zweiten Flüssigkeitsbehälters aus einer einheitlichen Schicht eines Materials gebildet ist, das integral mit dem ersten Flüssigkeitsbehälter bzw. dem zweiten Flüssigkeitsbehälter ausgebildet ist.

17. Dentalkapsel nach einem der Ansprüche 11 bis 16, wobei die zerbrechliche Membran eine Dicke von weniger als 0,02 mm aufweist.

18. Dentalkapsel nach einem der Ansprüche 11 bis 17, wobei die zerbrechliche Membran aus einer einheitlichen Schicht eines Materials gebildet ist.

## Revendications

1. Capsule dentaire pour mélanger et distribuer des matériaux dentaires composés d'au moins trois composants, la capsule comprenant :
un piston (20) ;
un premier récipient de liquide à extrémité ouverte (30) adapté pour recevoir le piston (20) ;
un deuxième récipient de liquide à extrémité ouverte (40) adapté pour recevoir le premier récipient de liquide (30) ;
dans laquelle le piston (20) a une protubérance faisant saillie vers l'avant (22) adaptée pour percer séquentiellement une partie affaiblie du premier récipient de liquide (30) et une partie affaiblie du deuxième récipient de liquide (40) ; et
un corps principal (50) avec une extrémité proximale (58), une extrémité distale (54), une chambre (51) ouverte au niveau de l'extrémité proximale et une ouverture (55) dans l'extrémité distale ;
dans laquelle la chambre (51) est adaptée pour recevoir le deuxième réceptacle de liquide (40) ; et
dans laquelle la capsule dentaire (10) est adaptée pour mélanger divers composants des matériaux dentaires et former une pâte dentaire à distribuer.

2. Capsule dentaire selon la revendication 1, dans laquelle un premier liquide est logé dans le premier récipient de liquide, un deuxième liquide est logé dans le deuxième récipient de liquide et une poudre est logée dans la chambre.

3. Capsule dentaire selon les revendications 1 ou 2, dans laquelle le premier réceptacle de liquide comporte une partie centralement affaiblie.

4. Capsule dentaire selon l'une quelconque des revendications précédentes, dans laquelle le deuxième réceptacle de liquide comporte une partie centralement affaiblie.

5. Capsule dentaire selon l'une quelconque des revendications précédentes, dans laquelle le piston est en prise avec le premier récipient de liquide de sorte que, lorsque le piston est enfoncé, le liquide dans le premier récipient soit poussé dans le deuxième récipient de liquide.

6. Capsule dentaire selon l'une quelconque des revendications précédentes, dans laquelle un enfoncement supplémentaire du piston amène le liquide dans le deuxième récipient de liquide à être poussé dans la chambre du corps de manière à entrer en contact avec le matériau dans la chambre, dans laquelle, après le mélange, une partie avant du deuxième récipient de liquide est brisée par l'enfoncement du piston de manière à pousser le mélange résultant à travers l'ouverture.

7. Capsule dentaire selon l'une quelconque des revendications précédentes, dans laquelle la capsule dentaire comprend en outre des caractéristiques internes qui fournissent un retour tactile à un opérateur en ce qui concerne dans quelle mesure le piston a été enfoncé, ou dans quelle mesure le premier récipient de liquide ou le deuxième récipient de liquide se sont déplacés.

8. Capsule dentaire selon l'une quelconque des revendications précédentes, dans laquelle la capsule dentaire, ou une partie de celle-ci, est fabriquée à partir d'un matériau transparent permettant à un opérateur de visualiser le mélange de liquides et/ou de poudre, et/ou dans quelle mesure le piston a été enfoncé.

9. Capsule dentaire selon l'une quelconque des revendications précédentes, dans laquelle la capsule dentaire comprend en outre une buse reliée à l'ouverture au niveau de l'extrémité distale du corps principal.

10. Capsule dentaire selon l'une quelconque des revendications précédentes, dans laquelle la capsule dentaire comprend en outre une membrane frangible couvrant l'ouverture au niveau de l'extrémité distale du corps principal.

11. Capsule dentaire selon la revendication 10, dans laquelle la membrane frangible qui, lorsqu'elle est brisée, donne accès à un dispositif applicateur, tel qu'une brosse ou un écouvillon, après que le mélange a été effectué.

12. Capsule dentaire selon l'une quelconque des revendications 1 à 4, dans laquelle le premier récipient de liquide et le deuxième récipient de liquide sont agencés pour libérer simultanément de multiples composants dans la chambre.

13. Capsule dentaire selon l'une quelconque des revendications précédentes, dans laquelle la chambre comporte des moyens d'aération pour permettre à l'air emprisonné de s'échapper de la pâte dentaire pendant l'extrusion.

14. Capsule dentaire selon les revendications 4 à 13, dans laquelle la partie centrale affaiblie du premier récipient de liquide et/ou du deuxième récipient de liquide a une épaisseur inférieure à 0,05 mm.

15. Capsule dentaire selon les revendications 4 à 14, dans laquelle la partie centrale affaiblie du premier récipient de liquide et/ou du deuxième récipient de liquide a une épaisseur inférieure à 0,03 mm.

16. Capsule dentaire selon les revendications 4 à 15, dans laquelle la partie centrale affaiblie du premier récipient de liquide et/ou du deuxième récipient de liquide est formée d'une feuille unitaire de matériau qui est solidaire du premier récipient de liquide ou du deuxième récipient de liquide respectivement.

17. Capsule dentaire selon les revendications 11 à 16, dans laquelle la membrane frangible a une épaisseur inférieure à 0,02 mm.

18. Capsule dentaire selon les revendications 11 à 17, dans laquelle la membrane frangible est formée d'une feuille unitaire de matériau.
